# EUROPÄISCHE PATENTSCHRIFT

(11) **EP 1 119 897 B1**
(45) Veröffentlichungstag und Bekanntmachung des Hinweises auf die Patenterteilung: **16.12.2009**
(21) Anmeldenummer: 00952933.0
(22) Anmeldetag: 13.07.2000
(51) Int. Cl.: H02M 3/156, H02M 3/335

(54) **VORRICHTUNG ZUR ERZEUGUNG EINES REGELSIGNALS FÜR EINEN GLEICHSPANNUNGSWANDLER**
DEVICE FOR GENERATING AN ADJUSTMENT SIGNAL FOR A D.C. CONVERTER
DISPOSITIF DE PRODUCTION D'UN SIGNAL DE REGLAGE POUR UN CONVERTISSEUR CONTINU-CONTINU

(30) Priorität: 15.07.1999 DE 19933039
(43) Veröffentlichungstag der Anmeldung: 01.08.2001
(73) Patentinhaber: ROBERT BOSCH GMBH, 70442 Stuttgart (DE)
(72) Erfinder: DITTMER, Bernd, D-71640 Ludwigsburg-Ossweil (DE); GRONBACH, Roman, D-70825 Korntal (DE)
(86) Internationale Anmeldenummer: PCT/DE2000/002290
(87) Internationale Veröffentlichungsnummer: WO 2001/006626

(56) Entgegenhaltungen:
- EP-A- 0 664 596
- EP-A- 0 759 653
- WO-A-95/09476
- DE-A- 4 127 577
- US-A- 4 456 872
- US-A- 5 598 092
- US-A- 5 717 322
- SANCHO J F: "ADVANTAGES AND FEATURES USING A COMMON AND EXTERNAL ERROR AMPLIFIER WITH VOLTGE REFERENCE CONTROLLED BY MICROCONTROLLER AVANTAGES ET CARACTERISTIQUES D'UTILISATION D'UN AMPLIFICATEUR D'ERREUR CENTRALISE ET EXTERNE A REFERENCE DE TENSION CONTROLEE PAR MICROCONTROLEUR" INTERNATIONAL TELECOMMUNICATIONS ENERGY CONFERENCE. (INTELEC),US,NEW YORK, IEEE, Bd. CONF. 15, 27. September 1993 (1993-09-27), Seiten 393-397, XP000496173

## Beschreibung

Die Erfindung betrifft eine Vorrichtung zur Erzeugung eines Regelsignals für einen Gleichspannungswandler mit den im Oberbegriff des Anspruchs 1 angegebenen Merkmalen.

### Stand der Technik

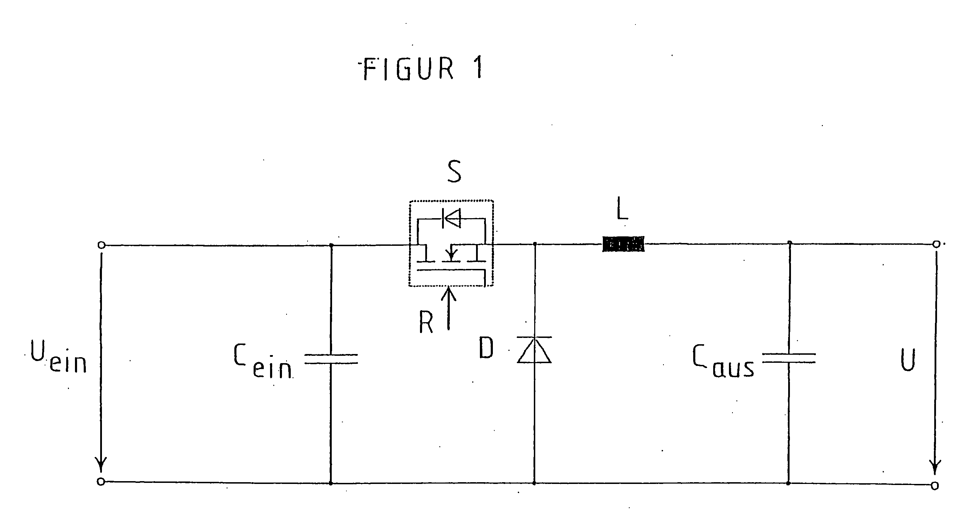

Gleichspannungswandler werden zur Umwandlung elektrischer Energie zwischen unterschiedlichen Spannungsniveaus eingesetzt. Ein Ausführungsbeispiel für einen derartigen bekannten Gleichspannungswandler ist in der Figur 1 dargestellt. Die an einem Eingangskondensator Cₑᵢₙ anliegende Eingangsspannung Uₑᵢₙ wird mittels eines Tiefsetzstellers in eine an einem Ausgangskondensator Cₐᵤₛ abgreifbare Ausgangsspannung U umgesetzt. Diese Umsetzung erfolgt unter Verwendung einer Reihenschaltung aus einem Leistungsschalter S und einer Drossel L, wobei zwischen dem Leistungsschalter und der Drossel die Kathode einer Diode D angeschlossen ist, deren Anode mit einem Referenzpotentional verbunden ist Das Tastverhältnis des Leistungsschalters, der einen Feldeffekttransistor aufweist, wird durch ein Regelsignal R vorgegeben, das unter Verwendung der rückgekoppelten Ausgangsspannung ermittelt wird.

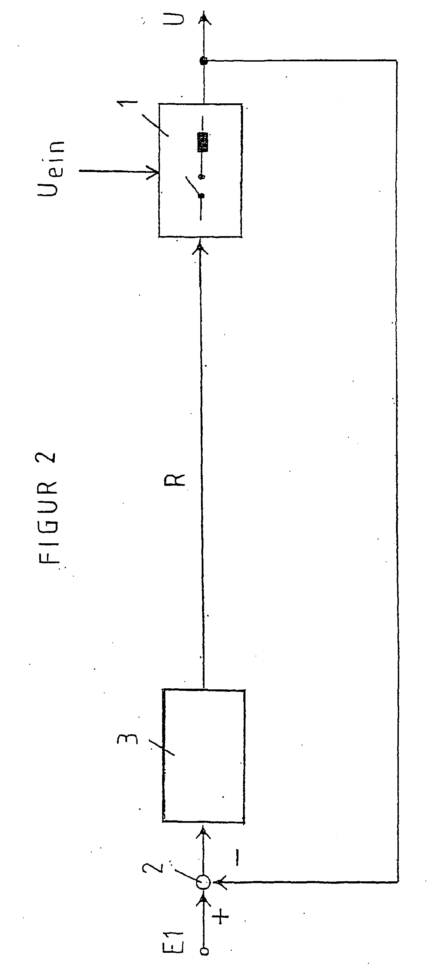

Dies ist in der Figur 2 veranschaulicht, die die zugehörige Regelstruktur aufzeigt. Die am Ausgang der Regelstrecke 1 abgreifbare Ausgangsspannung U wird auf die Eingangsseite zurückgekoppelt und in einem Subtrahierer 2 von einem Spannungssollwert subtrahiert, der an einem Eingang E1 vorliegt. An den Ausgang des Subtrahierers 2 ist ein Spannungsregler 3 angeschlossen, der ausgangsseitig das Regelsignal zur Verfügung stellt. Dieses gibt das Tastverhältnis für den der Regelstrecke zugehörigen Leistungsschalter an. Über dieses Tastverhältnis kann der an der Drossel anliegende Spannungsmittelwert eingestellt bzw. geregelt werden.

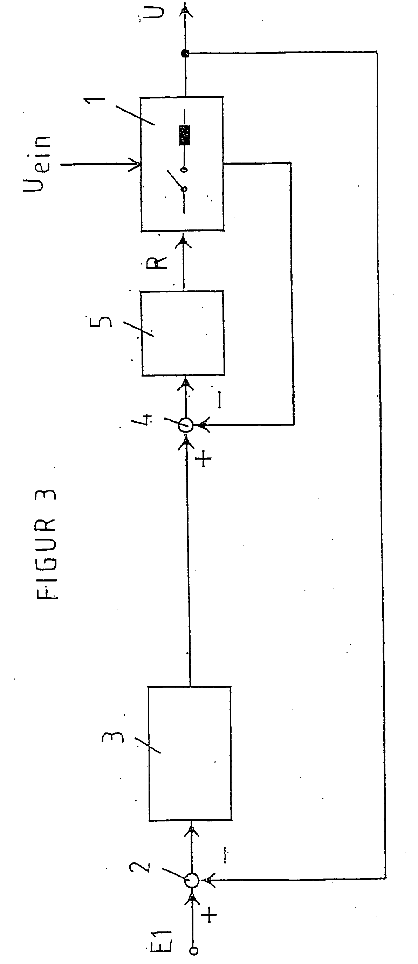

Weiterhin ist es bereits bekannt, das genannte Regelsignal R unter Verwendung eines Stromregelkreises zu erzeugen, dem ein Spannungsregler vorgeschaltet ist. Dies ist in der Figur 3 veranschaulicht, die die zugehörige Regelstruktur aufzeigt Die am Ausgang der Regelstrecke 1 abgreifbare Ausgangsspannung U wird auf die Eingangsseite zurückgekoppelt und in einem Subtrahierer 2 von einem Spannungssollwert subtrahiert, der an einem Eingang E1 vorliegt. An den Ausgang des Subtrahierers 2 ist ein Spannungsregler 3 angeschlossen, der ausgangsseitig einen Stromsollwert für einen Stromregelkreis zur Verfügung stellt. Von der Regelstrecke 1 wird weiterhin ein dem Drosselstrom entsprechender Stromistwert zurückgekoppelt und in einem Subtrahierer 4 vom Stromsollwert subtrahiert. Das Ausgangssignal des Subtrahierers 4 wird einem Stromregler 5 zugeführt, der an seinem Ausgang das Regelsignal R für die Regelstrecke 1 zur Verfügung stellt.

Die EP 0 759 653 A beschreibt eine Vorrichtung zur Erzeugung eines Regelsignals für einen Gleichspannungswandler, mit einem Spannungsregler, der eine Regelstrecke umfasst, der ein Spannungssollwert und ein Regelsignal zugeführt wird. Weiterhin ist ein Stromregler vorhanden, an dessen Ausgang das Regelsignal abgreifbar ist. Weiterhin ist ein Begrenzer zwischen den beiden Reglern vorgesehen, der das Ausgangssignal begrenzen soll. Der Begrenzer liefert ausgangsseitig das Regelsignal für die Regelstrecke des Spannungsreglers.

Aus der DE 41 27 577 A1 ist ein System zur Erzeugung einer Hochspannung aus einem Kraftfahrzeugbordnetz bekannt, mit einem Spannungsregler und einem Stromregler. Der Stromregler soll dabei den Strom durch einen Rosabscheider auf einen vorgebbaren Sollwert einregeln.

Die US-PS 5,717,322 zeigt eine Regelung, die nach dem sogenannten Peak-Current-Mode-Verfahren arbeitet.

Aus der WO 95/09476 ist eine Reglerschaltung mit einer Strombegrenzung bekannt, bei der die Strombegrenzung mit Hilfe einer Änderung der Schaltfrequenz erfolgt. Reglerstrukturen, die durch die Begrenzung ein Stromsollwertsignal in Grenzen halten, sind nicht bekannt.

Die US-PS 4,456,872 zeigt ein weiteres Spannungsregelungsverfahren, bei dem sich das Regelverfahren im Wesentlichen auf eine Begrenzung bei Hystereseregelungen beschränkt.

### Vorteile der Erfindung

Die erfindungsgemäße Vorrichtung zur Erzeugung eines Regelsignals für einen Gleichspannungswandler mit den Gesamtmerkmalen des Anspruchs 1 hat den Vorteil, daß sie alternativ eine Regelung der Ausgangsspannung oder eine Regelung des Stromes ermöglicht Weiterhin erfolgt im Betrieb mit Ausgangsspan-nungsregelung ein Überlastungsschutz durch eine Begrenzung des Ausgangsstromes.

Erzielt werden diese Vorteile durch die Verwendung eines zwischen den Spannungsregler und den Stromregler geschalteten Begrenzers für den Solistramwert. Dieser Begrenzer arbeitet in vorteilhafter Weise variabel und weist einen Eingangsanschluß auf, über welchen ihm ein Grenzwertsignal für den Stromsollwert zuführbar ist.

Vorteilhafte Ausgestaltungen und Weiterbildungen der Erfindung sind in den abhängigen Ansprüchen angegeben.

### Zeichnungen

- Figur 1: zeigt ein Ausführungsbeispiel eines bekannten Gleichspannungswandlers, der als Tiefsetzsteller verwendbar ist,
- Figur 2: eine erste bekannte Vorrichtung zur Erzeugung eines Regelsignals für einen Gleichspannungswandler,
- Figur 3: eine zweite bekannte Vorrichtung zur Erzeugung eines Regelsignals für einen Gleichspannungswandler,
- Figur 4: ein Ausführungsbeispiel für eine Vorrichtung gemäß der Erfindung zur Erzeugung eines Regelsignals für einen Gleichspannungswandler und
- Figur 5: ein Ausführungsbeispiel für eine Ausgestaltung des Begrenzers 6 von Figur 4.

### Beschreibung

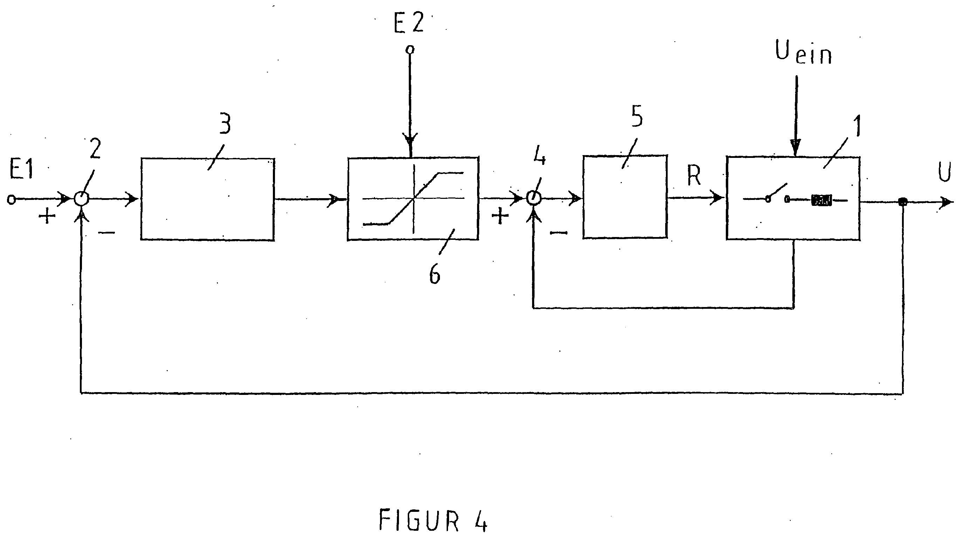

Die Figur 4 zeigt ein Ausführungsbeispiel für eine Vorrichtung gemäß der Erfindung zur Erzeugung eines Regelsignals für einen Gleichspannungswandler.

Der gezeigten Vorrichtung wird über den Eingangsanschluß E1 ein Spannungssollwert zugeführt, der in einem nicht gezeichneten Mikrocomputer erzeugt wird.

Dieser Spannungssollwert wird an einen Eingang eines Subtrahierers 2 weitergegeben. Am anderen Eingang des Subtrahierers 2 liegt die vom Ausgang der Regelstrecke 1 rückgekoppelte Ausgangsspannung U mit negativem Vorzeichen an, so daß im Subtrahierer 2 die Ausgangsspannung U vom Spannungssollwert subtrahiert wird.

Das erhaltene Differenzsignal wird einem Spannungsregler 3 zugeführt, der an seinem Ausgang einen von diesem Differenzsignal abhängigen Stromsollwert zur Verfügung stellt. Dieser Stromsollwert wird an einen variablen Begrenzer 6 weitergeleitet Diesem wird über einen Eingangsanschluß E2 ein Grenzwertsignal für den Stromsollwert zugeführt. Die Erzeugung des Grenzwertsignals für den Stromsollwert erfolgt ebenfalls mittels des oben genannten Mikrocomputers.

Das am Ausgang des Begrenzers 6 vorliegende begrenzte Stromsollwertsignal wird mit postivem Vorzeichen an einen ersten Eingang eines Subtrahierers 4 weitergegeben. Dessert zweiten Eingang wird ein aus der Regelstrecke 1 abgeleitetes Stromistwertsignal mit negativem Vorzeichen zugeführt, so daß im Subtrahierer 4 das Stromisiwertsignal vom begrenzten Stromsollwertsignal subtrahiert wird.

Das erhaltene Differenzsignal wird einem Strornregler 5 zugeführt, der an seinem Ausgang das Regelsignal R. für die Regelstrecke 1 zur Verfügung stellt, welches das Tastverhältnis für den der Regelschaltung 1 zugehörigen Leistungsschalter vorgibt.

Zur Erzeugung des genannten Regelsignals R für die Regelstrecke 1 wird folglich eine Regelstruktur verwendet, die einen überlagerten Spannungsregler und einen unterlagerten Stromregler aufweist, wobei die vom Spannungsregler vorgegebenen Stromsollwerte über einen Begrenzer 6 geführt werden. Diese Regelstruktur ermöglicht es, durch die Vorgabe geeigneter Werte für den dem Eingang E1 zugeführten Spannungssollwert und das dem Eingang E2 zugeführte Grenzwertsignal für den Stromsollwert verschiedene Betriebsarten zu realisieren, wie nachfolgend beschrieben wird.

In einer ersten Betriebsart mit geregelter Ausgangsspannung stellt der Spannungsregler die gewünschte Ausgangsspannung über die Vorgabe des Drosselstromsollwertes ein. Der unterlagerte Stromregler bewirkt hierbei regelungstechnische Vorteile, da die Ordnung des Spannungsreglers um eine Größenordnung reduziert sein kann. Steigt der durch das Ausgangssignal des Spannungsreglers vorgegebene Strombedarf über die durch das ebenfalls vorgegebene Grenzwertsignal für den Stromsollwert definierte Grenze, dann wird die Spannungsreglerbetriebsart durch die Begrenzung außer Betrieb gesetzt, um einen Überlastungsschutz für den Gleichspannungswandler zu erreichen. Der weiterhin arbeitende Stromregelkreis führt dann eine Regelung durch, bei der das vorgegebene Grenzwertsignal für den Stromsollwert dem positiven Eingang des Subtrahierers zugeführt wird. Dies entspricht einer Regelung auf das vorgegebene Grenzwertsignal für den Stromsollwert

Zur Realisierung einer Betriebsart mit geregeltem Ausgangsstrom wird dem Eingang E1 ein derart hoher Spannungssollwert zugeführt, daß der Spannungsregler 3 in den übersteuerten Zustand gebracht wird. Dies bewirkt einen Anstieg des am Ausgang des Spannungsreglers 3 erzeugten Stromsollwertes auf den durch die Schaltungstechnik begrenzten Maximalwert. Die Eingriffsmöglichkeit, der gezeigten Vorrichtung über den Eingang E2 einen Stromsollwert zuzuführen, erlaubt es nun, zur Realisierung einer reinen Stromreglerbetriebsart einen gewünschten Stromsollwert vorzugeben.

Mit dem überhöhten Spannungssollwert kann gleichzeitig die maximale Spannung am Ausgang limitiert werden, bis zu der allein der Stromregler aktiv ist. Beim Überschreiten dieser Spannungsgrenze wird der Strom- vom Spannungsregler abgelöst

Die reine Stromreglerbetriebsart kann insbesondere für einen Parallelbetrieb mehrerer Gleichspannungswandler verwendet werden. Dabei übemimmt ein übergeordneter Gleichspannungswandler die Spannungsregelung und teilt den weiteren Wandlern lediglich den Sollwert für den einzustellenden Ausgangsstrom zu. Die untergeordneten Wandler arbeiten somit als Stromquelle.

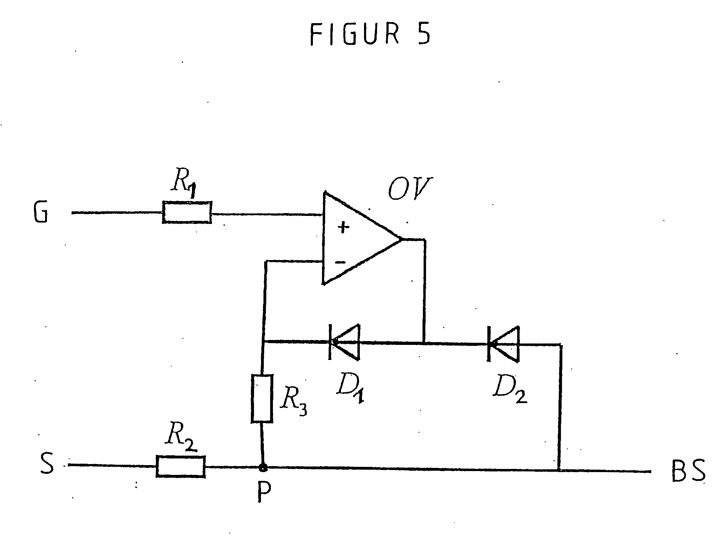

Die Figur 5 zeigt ein Ausführungsbeispiel für eine Ausgestaltung des Begrenzers 6 von Figur 4. Der gezeigte Begrenzer weist zwei Eingangsanschlüsse auf. Dem ersten dieser Eingangsanschlüsse wird der vom Spannungsregler 3 abgeleitete Stromsollwert S zugeführt. Am zweiten Eingangsanschluß, der dem in der Figur 4 gezeigten Eingangsanschluß E2 entspricht, steht das Grenzwertsignal G für den Stromsollwert zur Verfügung.

Das Grenzwertsignal G wird über einen ersten Widerstand R₁ an den positiven Eingang eines Differenzverstärkers OV angelegt. Der Stromsollwert S gelangt über einen zweiten Widerstand R₂ und einen dritten Widerstand R₃ an den negativen Eingang des Differenzverstärkers. Der Ausgang des Differenzverstärkers ist über eine erste Diode D₁ an den negativen Eingang des Differenzverstärkers rückgekoppelt

Weiterhin ist der Ausgang des Differenzverstärkers mit der Kathode einer zweiten Diode D₂ verbunden, deren Anode den Ausgang der Schaltung bildet, an welchem ein begrenzter Stromsollwert BS zur Verfügung steht. Die Anode der zweiten Diode D₂ ist weiterhin mit dem Verbindungspunkt P zwischen dem zweiten Widerstand R₂ und dem dritten Widerstand R₃ verbunden.

Der Vorteil einer derartigen Ausgestaltung des Begrenzers 6 besteht darin, daß die Zeitverzögerung bis zur aktiven Begrenzung des Signals gering ist Durch die Diode D₁ und den Widerstand R₃ befindet sich der Ausgang des Operationsverstärkers stets nur einige 100 mV über dem Spannungspegel des Stromsollwertes. Da durch den Widerstand R₃ der Stromsollwert leicht verfälscht wird, sollte sein Widerstandswert wesentlich größer als der Widerstandswert von R₂ gewählt werden. Der Widerstand R₁ dient lediglich zur Kompensation von Eingangsströmen des Operationsverstärkers.

Ein Gleichspannungswandler gemäß der Erfindung kann nach alledem durch eine Vorgabe jeweils geeigneter Werte für den Spannungssollwert und die Grenze des Stromsollwertes in verschiedenen Betriebsarten betrieben werden, insbesondere in einer Spannungsreglerbetriebsart mit Maximalstrombegrenzung oder in einer reinen Stromreglerbetriebsart.

## Patentansprüche

1. Vorrichtung zur Erzeugung eines Regelsignals (R) für einen Gleichspannungswandler, mit einem Spannungsregler (3) und einem Stromregler (5) , an dessen Ausgang das Regelsignal (R) abgreifbar ist, wobei zwischen dem Spannungsregler (3) und dem Stromregler (5) ein Begrenzer (6) vorgesehen ist, der zur Begrenzung eines Ausgangssignals des Spannungsreglers (3) dient wobei eine Regelstrecke (1) mit einem ersten Eingang für eine Eingangsspannung (Uₑᵢₙ), mit einem zweiten Eingang für das Regelsignal (R) und mit einem Ausgang für eine Ausgangsspannung (U) und ein erster Subtrahierer (2) vorgesehen sind, wobei der erste Subtrahierer zur Ermittlung der Differenz zwischen dem Spannungssollwert und der Ausgangsspannung dient und wobei der Spannungsregler (3) zur Erzeugung eines Stromsollwertes (5) dient und an den Ausgang des ersten Subtrahierers (2) angeschlossen ist, wobei ein zweiter Substrahierer (4) vorhanden ist welcher zur Ermittlung der Differenz zwischen einem begrenzten Stromsollwert (BS) und einem aus der Regelstrecke (1) abgeleiteten Stromistwert dient, wobei der Stromregler (5) an den zweiten Subtrahierer (4) angeschlossen ist und ausgangsseitig das Regelsignal (R) für die Regelstrecke (1) zur Verfügung stellt, **dadurch gekennzeichnet, dass** der Begrenzer (6) einen Operationsverstärker (OV) aufweist, dessen erstem Eingang ein Grenzwertsignal (G) zugeführt ist, dessen zweitem Eingang über eine Reihenschaltung aus einem zweiten Widerstand (R₂) und einem dritten Widerstand (R3) das tromsollwert (S) zugeführt ist, dessen Ausgang über eine Widerstand (R3) das Stromsollwert (S) zugeführt ist, dessen Ausgang über eine erste Diode (D1) mit dem zweiten Eingang verbunden ist und über eine zweite Diode (D2) mit einem Abgriffpunkt (P) zwischen dem zweiten und dem dritten Widerstand verbunden ist, und dass an diesem Abgriffpunkt (P) das begrenzte Stromsollwertsignal (BS) abgreifbar ist.

2. Vorrichtung nach Anspruch 1, **dadurch gekennzeichnet, dass** der Begrenzer (6) einen Eingangsanschluss (E2) für ein Signal aufweist, welches dem vorgebbaren Grenzwertsignal (6) für den Stromsollwert entspricht.

3. Vorrichtung nach einem der Ansprüche 1 bis 2, **dadurch gekennzeichnet, dass** sie einen Mikrocomputer zur Generierung des Grenzwertsignals (6) für den Stromsollwert (5) aufweist.

4. Vorrichtung nach einem der Ansprüche 1 bis 3, **dadurch gekennzeichnet, dass** sie einen Mikrocomputer zur Generierung des Spannungssollwertes aufweist.

5. Vorrichtung nach Anspruch 4, **dadurch gekennzeichnet, dass** der Mikrocomputer zur Realisierung einer reinen Stromreglerbetriebsart es Gleichspannungswandlers einen der Spannungsregler übersteuernden Spannungssollwert erzeugt.

6. Vorrichtung nach Anspruch 5, **dadurch gekennzeichnet, dass** sie mehrere parallel zueinander angeordnete Gleichspannungswandler aufweist.

7. Vorrichtung nach Anspruch 6, **dadurch gekennzeichnet, dass** das Grenzwertsignal (6) dem ersten Eingang des Operationsverstärkers über einen ersten Widerstand (R₁) zugeführt ist, der zur Kompensation von Eingangsströmen dient.

8. Vorrichtung nach Anspruch 6 oder 7, **dadurch gekennzeichnet, dass** der Widerstandswert des dritten Widerstandes (R₃) wesentlich größer ist als der Widerstandswert des zweiten Widerstandes (R₂).

## Claims

1. Apparatus for generating a control signal (R) for a DC/DC voltage converter, having a voltage regulator (3) and a current regulator (5), at the output of which the control signal (R) can be tapped off, a limiter (6) being provided between the voltage regulator (3) and the current regulator (5), which limiter is used to limit an output signal from the voltage regulator (3), a control path (1) having a first input for an input voltage (Uᵢₙ), having a second input for the control signal (R) and having an output for an output voltage (U) and a first subtractor (2) being provided, the first subtractor being used to determine the difference between the desired voltage value and the output voltage, and the voltage regulator (3) being used to generate a desired current value (S) and being connected to the output of the first subtractor (2), a second subtractor (4) being provided, said second subtractor being used to determine the difference between a limited desired current value (BS) and an actual current value derived from the control path (1), the current regulator (5) being connected to the second subtractor (4) and providing the control signal (R) for the control path (1) on the output side, **characterized in that** the limiter (6) has an operational amplifier (OV), the first input of which is supplied with a limit value signal (G), the second input of which is supplied with the desired current value (S) via a series circuit comprising a second resistor (R₂) and a third resistor (R₃), and the output of which is connected to the second input via a first diode (D1) and to a tapping point (P) between the second and third resistors via a second diode (D2), and **in that** the limited desired current value signal (BS) can be tapped off at this tapping point (P).

2. Apparatus according to Claim 1, **characterized in that** the limiter (6) has an input connection (E2) for a signal which corresponds to the predefinable limit value signal (G) for the desired current value.

3. Apparatus according to either of Claims 1 and 2, **characterized in that** it has a microcomputer for generating the limit value signal (G) for the desired current value (S).

4. Apparatus according to one of Claims 1 to 3, **characterized in that** it has a microcomputer for generating the desired voltage value.

5. Apparatus according to Claim 4, **characterized in that**, in order to implement a pure current regulator mode of the DC/DC voltage converter, the microcomputer generates a desired voltage value which overrides the voltage regulator.

6. Apparatus according to Claim 5, **characterized in that** it has a plurality of DC/DC voltage converters which are arranged parallel to one another.

7. Apparatus according to Claim 6, **characterized in that** the limit value signal (G) is supplied to the first input of the operational amplifier via a first resistor (R₁) which is used to compensate for input currents.

8. Apparatus according to Claim 6 or 7, **characterized in that** the resistance value of the third resistor (R₃) is considerably greater than the resistance value of the second resistor (R₂).

## Revendications

1. Dispositif de formation d'un signal de régulation (R) pour un convertisseur de tension continue, doté d'un régulateur de tension (3) et d'un régulateur de courant (5) à la sortie duquel le signal de régulation (R) peut être prélevé,
un limiteur (6) qui sert à limiter un signal de sortie du régulateur de tension (3) étant prévu entre le régulateur de tension (3) et le régulateur de courant (5),
un parcours de régulation (1) qui présente une première entrée pour une tension d'entrée (Uₑᵢₙ), une deuxième entrée pour le signal de régulation (R), une sortie pour une tension de sortie (U) et un premier soustracteur (2) étant prévu,
le premier soustracteur servant à déterminer la différence entre la valeur de consigne de tension et la tension de sortie et le régulateur de tension (3) servant à former une valeur de consigne de courant (S) et étant raccordé à la sortie du premier soustracteur (2),
un deuxième soustracteur (4) qui sert à déterminer la différence entre une valeur limitée de consigne de courant (BS) et une valeur effective du courant prélevée sur le parcours de régulation (1) étant prévu,
le régulateur de courant (5) étant raccordé au deuxième soustracteur (4) et présentant sur sa sortie le signal de régulation (R) du parcours de régulation (1) ,
**caractérisé en ce que**
le limiteur (6) présente un amplificateur opérationnel (OV) à la première entrée duquel un signal (G) de valeur limite est appliqué et à la deuxième entrée duquel la valeur de consigne de courant (S) est appliquée par l'intermédiaire d'un circuit série constitué d'une deuxième résistance (R₂) et d'une troisième résistance (R₃), et dont la sortie est reliée à la deuxième entrée par une première diode (D1) et est reliée par une deuxième diode (D2) à un point de prélèvement (P) situé entre la deuxième et la troisième résistance et
**en ce que** le signal de valeur limitée de consigne de courant (BS) peut être prélevé en ce point de prélèvement (P).

2. Dispositif selon la revendication 1, **caractérisé en ce que** le limiteur (6) présente une borne de raccordement d'entrée (E2) pour un signal qui correspond au signal prédéterminé de valeur limite (G) de la valeur de consigne du courant.

3. Dispositif selon l'une des revendications 1 et 2, **caractérisé en ce qu'**il présente un microordinateur qui génère le signal de valeur limite (G) de la valeur de consigne de courant (S).

4. Dispositif selon l'une des revendications 1 à 3, **caractérisé en ce qu'**il présente un microordinateur qui génère la valeur de consigne de tension.

5. Dispositif selon la revendication 4, **caractérisé en ce que** pour réaliser un mode de fonctionnement purement en régulateur de courant du convertisseur de tension continue, le microordinateur forme une valeur de consigne de tension qui commande prioritairement le régulateur de tension.

6. Dispositif selon la revendication 5, **caractérisé en ce qu'**il présente plusieurs convertisseurs de tension continue disposés parallèlement les uns par rapport aux autres.

7. Dispositif selon la revendication 6, **caractérisé en ce que** le signal de valeur limite (G) est amené à la première entrée de l'amplificateur opérationnel par une première résistance (R₁) qui sert à compenser les courants d'entrée.

8. Dispositif selon les revendications 6 ou 7,
**caractérisé en ce que** la valeur de la troisième résistance (R₃) est beaucoup plus grande que la valeur de la deuxième résistance (R₂).
